# EUROPEAN PATENT SPECIFICATION

(11) **EP 2 519 439 B1**
(45) Date of publication and mention of the grant of the patent: **24.01.2018**
(21) Application number: 09852852.4
(22) Date of filing: 28.12.2009
(51) Int. Cl.: B64C 11/16, B64C 11/48, B64C 11/18, B64C 11/20, B64D 27/02

(54) **AIR PROPELLER ARRANGEMENT AND AIRCRAFT**
LUFTPROPELLERANORDNUNG UND FLUGZEUG
CONFIGURATION D'HÉLICE AÉRIENNE ET AÉRONEF

(43) Date of publication of application: 07.11.2012
(73) Proprietor: GKN Aerospace Sweden AB, 461 81 Trollhättan (SE)
(72) Inventor: AVELLAN, Richard, S-416 72 Göteborg (SE); LUNDBLADH, Anders, S-461 59 Trollhättan (SE)
(74) Representative: D Young & Co LLP
(86) International application number: PCT/SE2009/000539
(87) International publication number: WO 2011/081577

(56) References cited:
- DE-A1- 3 723 101
- SE-C- 134 856
- US-A- 1 780 431
- US-A- 1 888 681
- US-A- 4 976 102
- US-A- 5 190 441
- US-A- 5 190 441
- US-A1- 2004 067 138
- US-A1- 2004 067 138
- US-A1- 2009 035 133
- US-B1- 7 396 208

## Description

### TECHNICAL FIELD

This invention relates to an air propeller arrangement for propulsion of a fixed-wing aircraft. In particular, the invention relates to high speed propellers. The invention also relates to an aircraft provided with such an air propeller arrangement.

### BACKGROUND OF THE INVENTION

Strict environmental goals on reducing emissions of carbon dioxide, nitrogen oxides and noise for the aviation sector have enhanced the need for further development of aircraft propulsion systems.

Propellers have been used for propulsion of fixed-wing aircrafts since the Wright brothers first flew their Wright Flyer in 903, but since the high speed jet engine technology was introduced on the commercial air transport market in the 1950s propellers have mostly been used for commuter transport, general aviation and freighters. Accordingly, development of aircraft engines has been focused on jet engines.

Propellers in general are generating very low excess kinetic energies due to very low operating pressure ratios compared to modern turbofans. This results in very high propulsive efficiencies. During the 1980s work was carried, out regarding a high speed propeller, which is designed for cruise speeds close to that of modern jet airplanes, in the range of ach 0.7 to Mach 0.8. Demonstrations performed by NASA and General Electric showed a reasonable potential for this technique (GE Aircraft Engines, "Full scale technology demonstration of a modem counter-rotating unducted fan engine concept - Design Report/Engine Test", NASA CR-180867/NASA CR-180869, December 1987). US 1 888 681 discloses a double blade propeller, wherein the blades are arranged one in advance of the other, with one blade provided with a slightly greater carvature than the other blade to increase the action of the blades on the fluid.

A conventional un-swept propeller, i.e. a propeller where the propeller blades extend substantially perpendicular to the propeller axis, is limited by the forward speed of the airplane, since the combination of the propeller rotational speed and airplane forward speed results in high relative Mach numbers at the propeller blade tips which causes severe performance losses and noise. However, by the introduction of swept propeller blades and advanced airfoils the compressibility effects are delayed and the propeller can be operated at higher speeds with less performance losses as a consequence.

Conventional high speed propellers (single and counter-rotating propellers) are rearward swept with an increasing sweep towards the tip. To avoid high Mach number compressibility drag on the inner part of the propeller, nacelle contouring is used. This slows down the axial speed of the air entering the propeller some distance out from the nacelle.

Although there is some technological progress made in the field of high-speed propellers over the last decades, there is still a need of further improvements to make this technique suitable for the commercial air transport market.

### SUMMARY OF THE INVENTION

Aspects of the invention are defined in the appended claims.

An object of this invention is to provide a propeller for a fixed-wing aircraft that exhibit improved properties compared to conventional propellers. This object is achieved by the air propeller arrangement and aircraft defined by the technical features contained in independent claim 1. The dependent claims contain advantageous embodiments, further developments and variants of the invention.

The invention concerns an air propeller arrangement for propulsion of a fixed- wing aircraft, said arrangement comprising a first air propeller that comprises a first hub member and at least a first and a second propeller blade, said first
and second blades being configured to contribute significantly to said propulsion and having a substantially equal length, wherein each of said blades has an inner, root end arranged at the first hub member and an outer, tip end positioned at a distance from the first hub member such that each blade extends in a radial direction from the first hub member. In the inventive arrangement, the first and second blades are interconnected at their outer ends.

An advantageous effect of this design is that it reduces the induced drag at the tip ends of the propeller blades, which is useful for increasing the propeller efficiency (which reduces fuel consumption) and for reducing noise. Moreover, it improves the structural mechanics in that it decreases the bending moment at the root end of the blades and decreases the displacement at the tip ends. This is in turn useful for reducing weight (i.e. blade thickness) and/or for providing stiffer blades (for the purpose of preventing aerodynamic flutter). In particular, the invention is useful for high-speed propellers because it alleviates or suppresses the well known mechanical problems associated with the design of highly swept propeller blades and makes it possible to design forward-swept blades with increased aerodynamic efficiency.

How much the induced drag is reduced depends on loading and rotational speed of the propeller as well as on geometrical factors, such as the relationship between the length of and the distance between the interconnected or joined blades, the shape of the blades and their interconnecting parts, to what extent the distance between the interconnected blades varies along.the length of the blades etc.

For a box-shaped, interconnected blade pair (i.e. where the distance between the root ends and the tip ends is about the.same) the reduction of induced drag can be expected to be more significant than in the case where the inter-connected blades form a triangle with the tip ends close together.

However, a triangular or triangular-like shape can give a lower root bending moment and tip displacement compared to inter-connected blades forming a box-shape. Various hybrid combinations of triangular- and box-shape are conceivable. What shape to use depends on the application. A shape that is advantageous in many situations is a generally triangular shaped structure that has a certain gap between the blades at their tip ends.

Based on experience of aircraft wings, which have a shape in many ways similar to that of propeller blades, it may be noted that for a modern jet transport airplane the profile drag contributes to some 60-75% of the total drag in the cruise flight, the lift induced drag contributes with 25-35% and the compressibility drag is usually some 5% of the total drag. At lower speed regimes, such as the take-off and climb segment of a typical flight profile, the induced drag can contribute up to some 80% of the total drag. Although the take-off and flight segments are small parts of the total flight mission, the thrust requirement at take-off and climb will have a great impact on the design of the engine and therefore is very important to consider. Also, the aerodynamic efficiency of the propeller at the lower speed regimes will have an impact on the noise levels in vicinity of the airport.

The term "air propeller arrangement for propulsion of a fixed-wing aircraft" refers to propeller-driven aircrafts provided with fixed wings where the propeller primarily provides a propulsive force when rotating. This term does not include marine propellers or rotors of rotary-wing aircraft, such as helicopters.

The definitions that the first and second blades are "configured to contribute significantly to said propulsion" and have "a substantially equal length" are included to differentiate the invention from e.g. blade tip extensions that might have been used on low speed propellers.

In an embodiment of the invention the first and second blades are interconnected via an interconnecting member extending between said outer ends of the blades. Preferably, the interconnecting member forms an integral part of the first and second blades. Preferably, the interconnecting member has the shape of a continuous curvature. Such a continuous curvature has suitably the shape of a catenary in order to achieve a bending-moment free propeller blade connection.

In an embodiment of the invention the first and second blades are spaced in a circumferential direction of the first hub member.

In an embodiment of the invention the root ends of the first and second blades are separated from each other.

In an embodiment of the invention the root ends of the first and second blades are spaced in a circumferential direction of the first hub member.

In an embodiment of the invention the root ends of the first and second blades are spaced in an axial direction of the first hub member.

In an embodiment of the invention at least one of the first and second blades is swept. In a variant, at least one of the first and second blades is configured in such a way that its tip end is displaced in relation to its root end in an axial direction of the first hub member.

In an embodiment of the invention both the first and second blades are swept. In a variant, each of the first and second blades is configured in such a way that its tip end is displaced in relation to its root end in an axial direction of the first hub member. In a further variant, the first and second blades are swept in the same direction. Thus, the blades are either forward-or aft-swept. In a further variant, the direction in which the tip end of the first blade is displaced in relation to its corresponding root end is the same as the direction in which the tip end of the second blade is displaced in relation to its corresponding root end.

In an embodiment of the invention the first and/or the second swept blade is curved in the axial direction of the first hub member and/or the first and/or the second blade is inclined in relation to the axial direction of the first hub member.

In an embodiment of the invention the first air propeller comprises a plurality of pairs of propeller blades, wherein each of said blade pairs comprises a first and a second blade according to anyone of the above claims. Preferably, the blade pairs are circumferentially distributed around the first hub member.

In an embodiment of the invention the propeller arrangement comprises a second air propeller arranged in association with the first air propeller, wherein the second air propeller comprises a second hub member and at least a third and a fourth propeller blade that extend radially from the second hub member.

Preferably, the second propeller is generally arranged in a similar way as the first propeller. Further, the first and second hub members are preferably concentrically arranged, wherein the second air propeller is arranged to rotate in an opposite direction in relation to the first air propeller.

In an embodiment of the invention both the third and fourth blades are swept in the same direction. In a variant, the first, second, third and fourth blades are all swept in a forward direction, wherein forward direction is related to an intended general direction of propulsion.

Generally, an axial direction of the first hub member substantially coincides with an intended general direction of propulsion.

The invention also refers to an aircraft comprising an air propeller arrangement of the above type. In an embodiment of such an aircraft the propeller arrangement is arranged to the aircraft in such a way that an axial direction of the first hub member substantially coincides with the intended general direction of travel of the aircraft.

### BRIEF DESCRIPTION OF DRAWINGS

In the description of the invention given below reference is made to the following figure, in which:
Figure 1 shows an air propeller arrangement according to prior art.
Figures 2a-2c show a first preferred embodiment of the invention,
Figures 3a-3c show a second example embodiment.
Figures 4a-4c show a third preferred embodiment of the invention, and
Figures 5-7 show the example according to figures 3a-3c arranged together with an engine.

### DESCRIPTION OF EXAMPLE EMBODIMENTS OF THE INVENTION

Conventionally, each propeller blade discussed here has an airfoil shape with a leading edge, a trailing edge, a suction side and a pressure side. The term *chord* refers to the imaginary straight line joining the trailing edge and the center of curvature of the leading edge. The term *chord length* (c) is the distance between the trailing edge and the point on the leading edge where the chord intersects the leading edge, and is thus a measure of the width of the blade. Further, each blade has a root (inner) end arranged at the hub member and a tip (outer) end positioned at a distance from the hub member as seen in a radial direction of the hub member. Commonly, the chord length varies along the blade with a greater length at the root end and a smaller length at the tip end.

Below it is referred to 0,25c and 0,5c; these terms refer to an imaginary line, drawn between the points representing 25% and 50%, respectively, of the length of the chord line along the blade profile as measured from the leading edge of the blade. Thus, a 0,5c-line extends along the blade between the root and tip ends halfway between the leading edge and the trailing edge, whereas a 0,25c-line extends along the blade between the root and tip ends halfway between the leading edge and the 0,5c-line.

That the blades are swept means that they are at least partly inclined and/or curved in relation to a centerline of the propeller, i.e. in relation to an axial direction of the hub member from which the blades extend. A condition for such sweeping is that the 0,5c-line of the blade is *not* perpendicular to the centerline of the propeller at all points along the entire length of the blade, i.e. that the blade does *not* form an isosceles trapezoid (as a planform in the relevant plane). If a blade is swept, its tip end normally becomes displaced in relation to its root end as seen in (i.e. in relation to) an axial direction of the hub member at which the blade is arranged. However, in some special cases a blade may be swept without having its tip and root ends axially displaced, for instance if the blade is symmetrically curved but not inclined.

Examples of measures of sweep are *leading edge sweep angle*, which is the angle between a line perpendicular to the propeller centerline and the front edge (leading edge) of the blade, and *quarter chord sweep angle,* which is the angle between a line perpendicular to the propeller centerline and the 0,25c-line. If the blade is curved the sweep angle varies along the blade.

A forward-swept blade is inclined and/or curved in a direction corresponding to the intended movement direction of the propeller, i.e. the normal forward direction of an aircraft onto which the propeller is arranged. Similarly, an aft-swept blade is inclined and/or curved in a direction opposite to the intended movement direction of the propeller, i.e. the normal rear or backward direction of an aircraft onto which the propeller is arranged. This means that in most cases the tip end 0,5c-line of a forward-swept blade is displaced in a forward direction in relation to the 0,5c-line of the corresponding root end and that the tip end 0,5c-line of an aft-swept blade is displaced in a rear direction in relation to the 0,5c-line of the corresponding root end. In the special cases referred to above, where the blade is swept but its tip and root ends not axially disclosed, the term swept refers to the upper region of the blade. For example, a symmetrically curved but not inclined propeller blade having an upper region that is curved towards a rear direction is said to be aft-swept.

For a variable pitch propeller the definition of sweep should be applied when the blade angle setting is such as to produce forward thrust.

Moreover, each blade has a length or span as seen in the root-to-tip direction. A standard mean chord (SMC) of the blade can be calculated as blade area S (planform) divided by blade span or length L: SMC = S/L.

The aspect ratio (AR) of a propeller blade is the length (span)-width (chord) relation of the blade where a high aspect ratio indicates a long, narrow blade and a low aspect ratio indicates a short, stubby blade. Since the chord usually varies along the blade the aspect ratio is defined as the square of the blade length (L) divided by blade area S (planform): AR = L²/S.

The aspect ratio of propeller blades of the type of interest here is typically below 9. As a comparison, the aspect ratio of helicopter rotors is typically above at least 12.

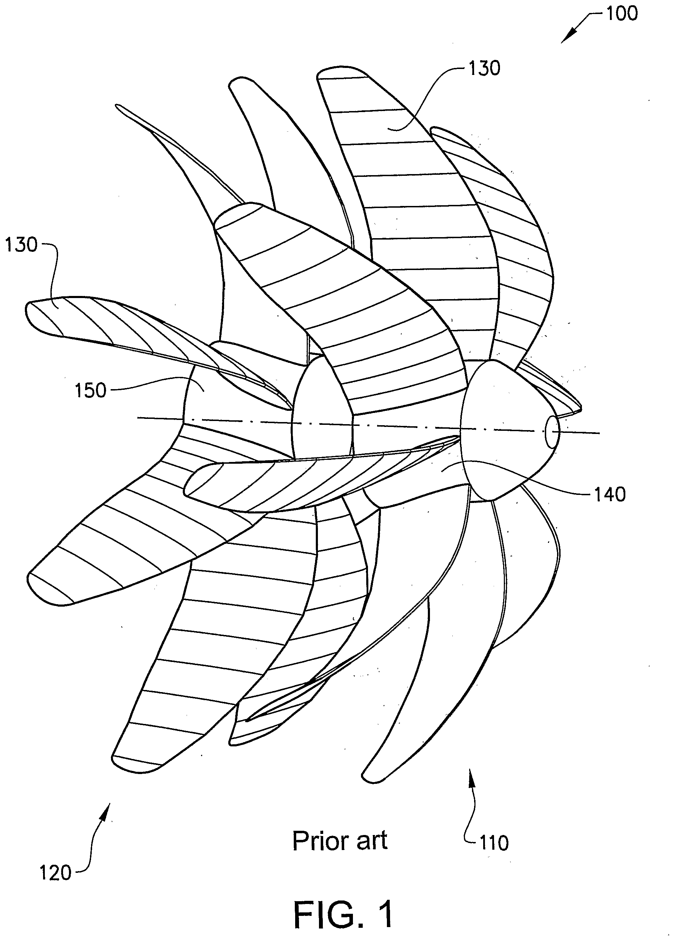

The propeller blades shown in figures 1-6 are provided with a plurality of lines on one of the sides of the blades. These lines are drawn only to better visualize the shape of the blades.

Figure 1 shows a typical counter-rotating high speed air propeller arrangement 100 having a first, forward air propeller 110 comprising a first hub member 140 provided with eight propeller blades 130 and a second, aft air propeller 120 comprising a second hub member 150 also provided with eight propeller blades 130. The propeller blades 130 of both hub members 110, 120 are highly swept in the aft direction of the propeller arrangement 100. The two propellers 110, 120 are arranged to be rotated in opposite directions (counter-rotating).

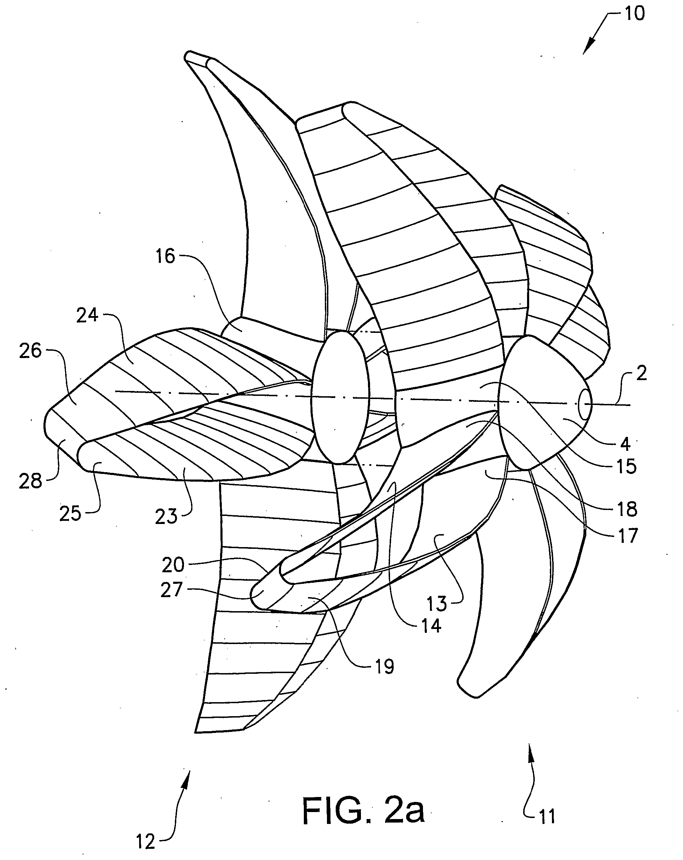

Figures 2a-2c show a first preferred embodiment of an air propeller arrangement 10 for propulsion of a fixed-wing aircraft. The arrangement 10 comprises a first air propeller 11 that in turn comprises a first hub member 15 and a first and a second propeller blade 13, 14 forming one out of, in this example, four similar pairs of propeller blades circumferentially distributed around the first hub member 15. Thus, the first propeller 11 is provided with in total eight propeller blades, which all are configured to contribute significantly to said propulsion. All blades, including the first and second blades 13, 14, have a substantially equal length from an inner, root end 17, 18 arranged at the first hub member 15 to an outer, tip end 19, 20 positioned at a distance from the first hub member 15. Each blade 13, 14 extends in a radial direction from the first hub member 15. As shown in figures 2a-2c, the first and second blades 13, 14, as well as the other blade pairs, are interconnected at their outer ends 19, 20 by a continuous curvature 27.

The interconnection 27 between the outer ends 19, 20 of the blade pair may be regarded as a continuous transition from the tip end 19 of the first blade 13 to the tip end 20 of the second blade 14. It can also be regarded as involving an interconnecting member 27 that, in this example, has a continuous curvature and forms an integral part of the connected blades. Since the blades are interconnected at their outer ends, the tip end of each blade can not be defined as distinct as a tip end of a conventional propeller blade. The tip ends of the interconnected blades can be regarded more as tip end regions.

An axial direction of the hub member 15, which corresponds to an axial direction of the arrangement 10, is indicated with a line 2. The centerline of the propeller coincides with the line 2.

The arrangement 10 further comprises a second air propeller 12 concentrically arranged in relation to the first air propeller 11, wherein the second air propeller 12 comprises a second hub member 16 and a third and a fourth propeller blade 23, 24 forming one out of, in this example, four similar pairs of propeller blades circumferentially distributed around the second hub member 16 and extending radially from the second hub member 16. The third and fourth propeller blades 23, 24 are arranged in relation to each other and to the second hub member 16 in the same principal way as the first and second blades 13, 14 are arranged in relation to each other and to the first hub member 15. Accordingly, also the third and fourth blades 23, 24, as well as the other blade pairs of the second propeller 12, are interconnected at their outer ends 25, 26 by a continuous curvature 28.

A difference between the blades of the first propeller 11 and the blades of the second propeller 12 is that they are turned or twisted in different directions because the two propellers 11, 12 are arranged to be rotating in opposite directions during operation of the arrangement 10.

A spinner 4 indicates a front part and thus an intended movement direction for the propeller arrangement 10.

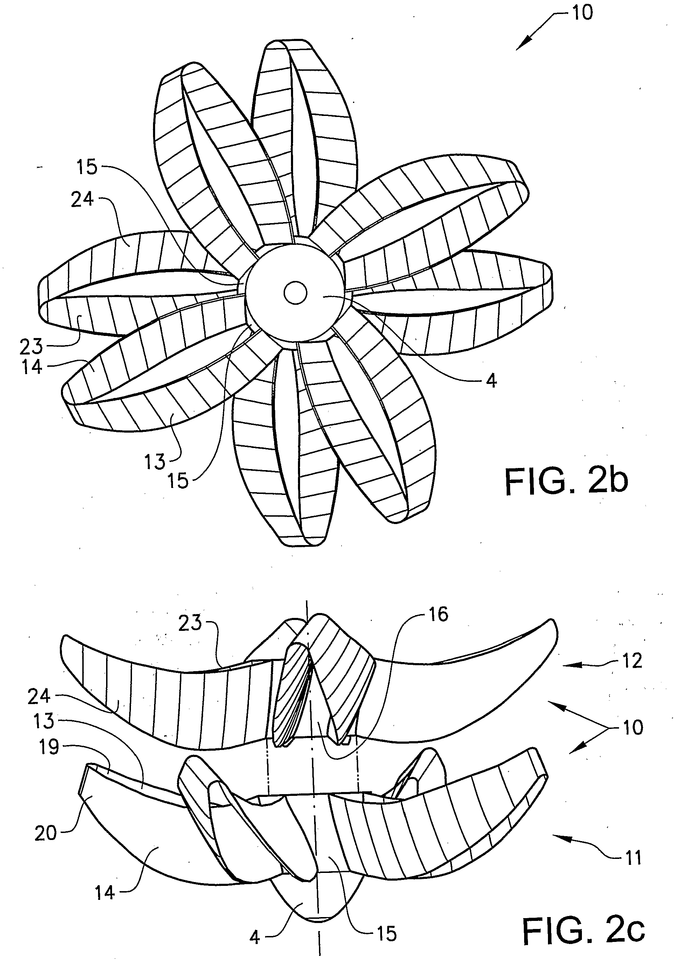

All propeller blades 13, 14, 23, 24 of the arrangement 10 shown in figures 2a-2c are aft-swept (see figure 2c).

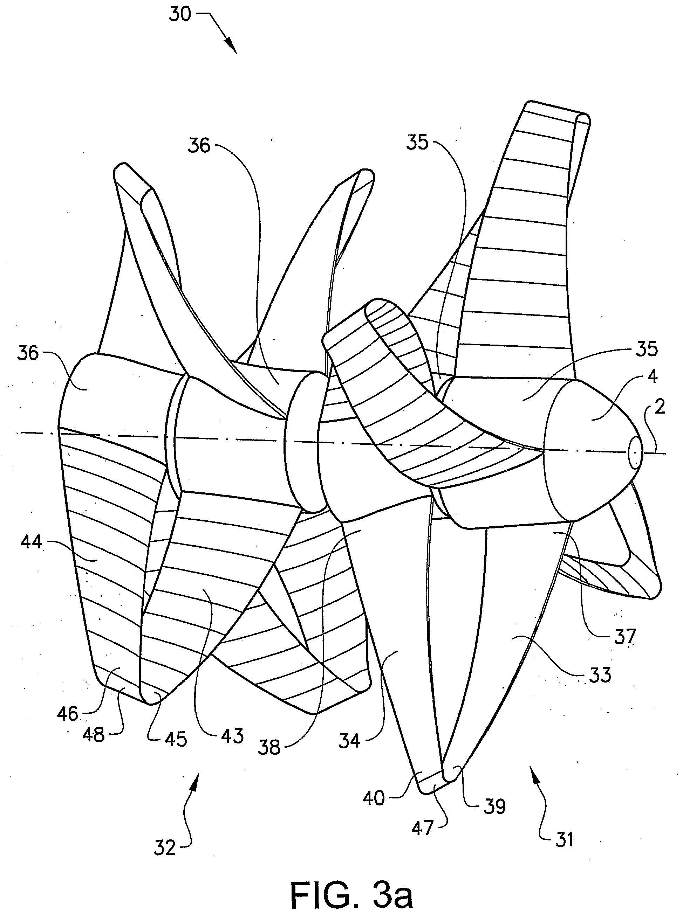

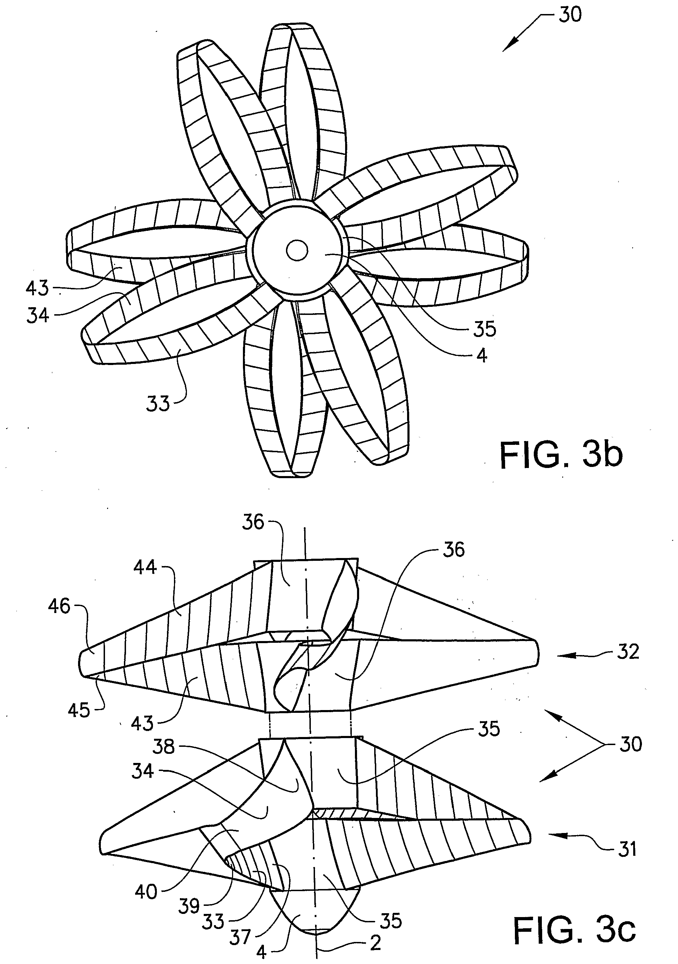

Figures 3a-3c show a second example not covered by the appended claims of an air propeller arrangement 30 for propulsion of a fixed-wing aircraft. The arrangement 30 comprises a first air propeller 31 that in turn comprises a first hub member 35 and a first and a second propeller blade 33, 34 forming one out of, in this example, four similar pairs of propeller blades circumferentially distributed around the first hub member 35. Thus, the first propeller 31 is provided with in total eight propeller blades, which all are configured to contribute significantly to said propulsion. All blades, including the first and second blades 33, 34, have a substantially equal length from an inner, root end 37, 38 arranged at the first hub member 35 to an outer, tip end 39, 40 positioned at a distance from the first hub member 35. Each blade 33, 34 extends in a radial direction from the first hub member 35. As shown in figures 3a-3c, the first and second blades 33, 34, as well as the other blade pairs, are interconnected at their outer ends 39, 40 by a continuous curvature 47.

The interconnection 47 between the outer ends 39, 40 of the blade pair may be regarded as a continuous transition from the tip end 39 of the first blade 33 to the tip end 40 of the second blade 34. It can also be regarded as involving an interconnecting member 47 that, in this example, has a continuous curvature and forms an integral part of the connected blades. Since the blades are interconnected at their outer ends, the tip end of each blade can not be defined as distinct as a tip end of a conventional propeller blade. The tip ends of the interconnected blades can be regarded more as tip end regions.

An axial direction of the hub member 35, which corresponds to an axial direction of the arrangement 30, is indicated with a line 2. The centerline of the propeller coincides with the line 2.

The arrangement 30 further comprises a second air propeller 32 concentrically arranged in relation to the first air propeller 31, wherein the second air propeller 32 comprises a second hub member 36 and a third and a fourth propeller blade 43, 44 forming one out of, in this example, four similar pairs of propeller blades circumferentially distributed around the second hub member 36 and extending radially from the second hub member 36. The third and fourth propeller blades 43, 44 are arranged in relation to each other and to the second hub member 36 in the same principal way as the first and second blades 33, 34 are arranged in relation to each other and to the first hub member 35. Accordingly, also the third and fourth blades 43, 44, as well as the other blade pairs of the second propeller 32, are interconnected at their outer ends 45, 46 by a continuous curvature 48.

A difference between the blades of the first propeller 31 and the blades of the second propeller 32 is that they are turned or twisted in different directions because the two propellers 31, 32 are arranged to be rotating in opposite directions during operation of the arrangement 30.

A spinner 4 indicates a front part and thus an intended movement direction for the propeller arrangement 30.

In the arrangement 30 shown in figures 3a-3c the first blade 33 and the third blade 43 are aft-swept, whereas the second blade 34 and the fourth blade 44 are forward-swept (see figure 3c). This means that one of blades in each interconnected blade pair is aft-swept (the first and the third blade 33, 43) and that the other blade in each interconnected blade pair is forward-swept (the second and the fourth blade 34, 44).

Figure 3c also shows that the root ends 37, 38 of the blades in each interconnected blade pair are displaced in the axial direction 2 of the arrangement in such a way that the root end of the first and third blades 33, 43 are positioned in front of (closer to the spinner 4 than) the root end of the second and fourth blades 34, 44, respectively. In this example the root ends of each blade pair are even axially spaced, i.e. there is a distance in the axial direction between the root end trailing edge of the first (third) blade 33 (43) and the root end leading edge of the second (fourth) blade 34 (44).

Thus, in the propeller arrangement 30 shown in figures 3a-3c each interconnected blade pair has a front, aft swept blade and an aft, forward-swept blade.

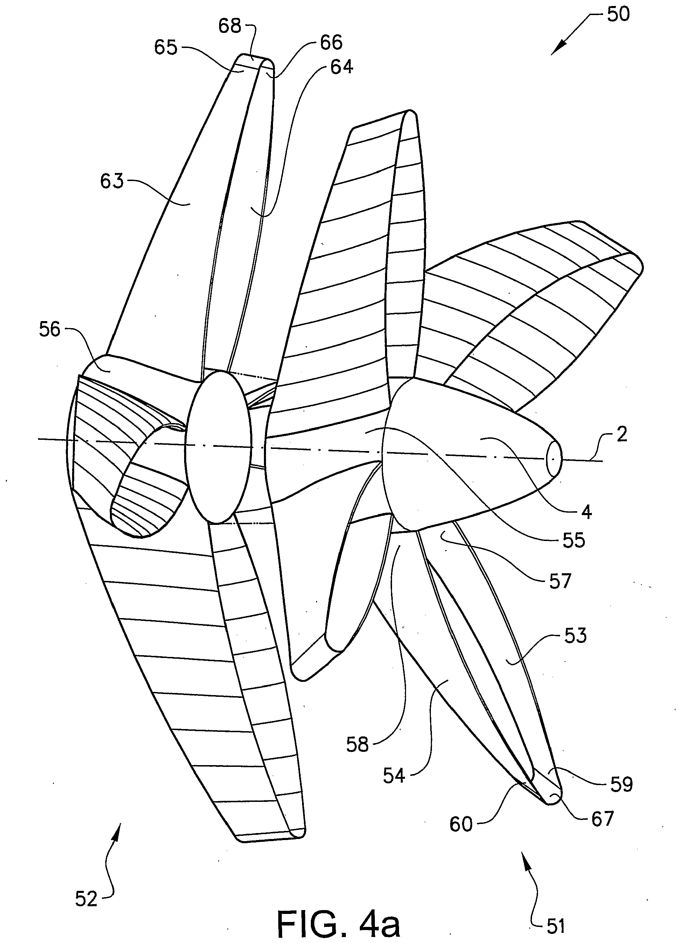

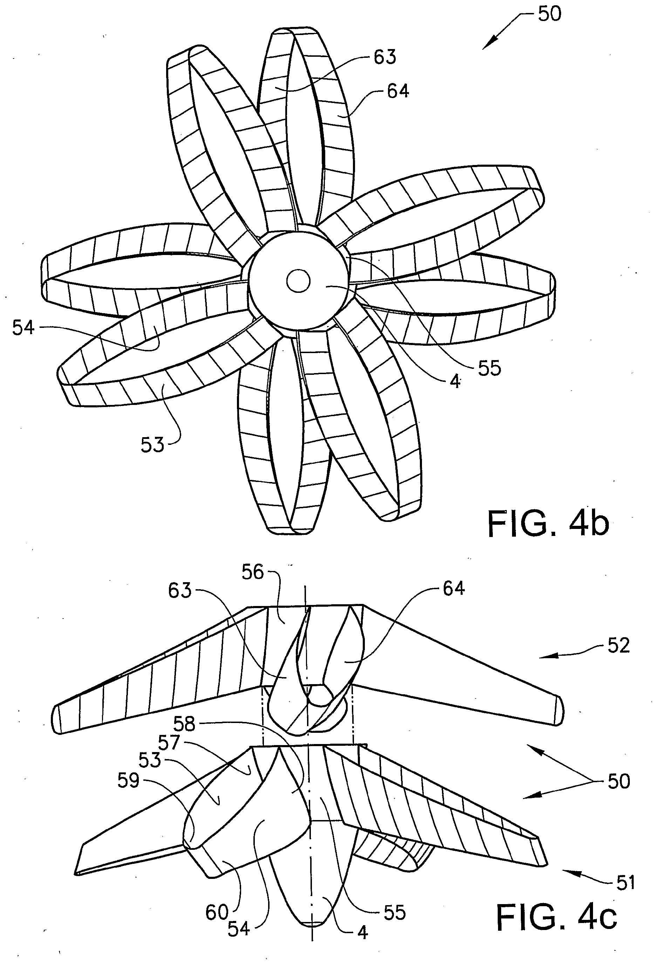

Figures 4a-4c show a third preferred embodiment of an air propeller arrangement 50 for propulsion of a fixed-wing aircraft. The arrangement 50 comprises a first air propeller 51 that in turn comprises a first hub member 55 and a first and a second propeller blade 53, 54 forming one out of, in this example, four similar pairs of propeller blades circumferentially distributed around the first hub member 55. Thus, the first propeller 51 is provided with in total eight propeller blades, which all are configured to contribute significantly to said propulsion. All blades, including the first and second blades 53, 54, have a substantially equal length from an inner, root end 57, 58 arranged at the first hub member 55 to an outer, tip end 59, 60 positioned at a distance from the first hub member 55. Each blade 53, 54 extends in a radial direction from the first hub member 55. As shown in figures 4a-4c, the first and second blades 53, 54, as well as the other blade pairs, are interconnected at their outer ends 59, 60 by a continuous curvature 67.

The interconnection 67 between the outer ends 59, 60 of the blade pair may be regarded as a continuous transition from the tip end 59 of the first blade 53 to the tip end 60 of the second blade 54. It can also be regarded as involving an interconnecting member 67 that, in this example, has a continuous curvature and forms an integral part of the connected blades. Since the blades are interconnected at their outer ends, the tip end of each blade can not be defined as distinct as a tip end of a conventional propeller blade. The tip ends of the interconnected blades can be regarded more as tip end regions.

An axial direction of the hub member 55, which corresponds to an axial direction of the arrangement 50, is indicated with a line 2. The centerline of the propeller coincides with the line 2.

The arrangement 50 further comprises a second air propeller 52 concentrically arranged in relation to the first air propeller 51, wherein the second air propeller 52 comprises a second hub member 56 and a third and a fourth propeller blade 63, 64 forming one out of, in this example, four similar pairs of propeller blades circumferentially distributed around the second hub member 56 and extending radially from the second hub member 56. The third and fourth propeller blades 63, 64 are arranged in relation to each other and to the second hub member 56 in the same principal way as the first and second blades 53, 54 are arranged in relation to each other and to the first hub member 55. Accordingly, also the third and fourth blades 63, 64, as well as the other blade pairs of the second propeller 52, are interconnected at their outer ends 65, 66 by a continuous curvature 68.

A difference between the blades of the first propeller 51 and the blades of the second propeller 52 is that they are turned or twisted in different directions because the two propellers 51, 52 are arranged to be rotating in opposite directions during operation of the arrangement 50.

A spinner 4 indicates a front part and thus an intended movement direction for the propeller arrangement 50.

All propeller blades 53, 54, 63, 64 of the arrangement 50 shown in figures 4a-4c are forward-swept (see figure 4c).

The blades in each interconnected blade pair, for instance the first blade 13, 33, 53 and the second blade, 14, 34, 54, are spaced in a circumferential direction of the corresponding hub member 15, 35, 55. In particular, the root ends of these blades are circumferentially spaced. In some applications it may be advantageous to design the blade pair in such a way that they are joined also at the root end, i.e. close to the root end the blade splits into a blade pair of the above described type. This way it can be easier to provide an arrangement for adjusting the blade angle (for varying the angle of attack).

Various parameters of the propeller arrangement can be modified depending on the application. Examples of such parameters are: the number of interconnected blade pairs; the circumferential distance between the interconnected blades; the shape of the space formed between the interconnected blades; the length, curvature, sweeping, twist, shape (airfoil and other) of the blades; and the shape of interconnecting portion or member that connects two blades.

A forward swept blade is likely to have better aerodynamic properties than an aft swept blade in terms of drag and maximum angle of attack. This is due to boundary layer effects. It is thus reasonable to expect a forward swept propeller to be more efficient than an aft swept propeller. However, a forward swept propeller is generally prone to flutter. The forward-aft swept structure shown in figures 3a-3c, in which each pair of propeller blades consists of one forward swept and one aft swept blade, can therefore form a suitable intermediate in terms of efficiency while providing adequate structural stability. In addition, a forward-aft swept blade pair allows the blade tips to be more close together, making the mostly tangential surface between them smaller.

Another benefit of the propeller blade interconnection, besides the superior induced drag properties, is its interesting structural mechanical properties. A transonic high speed propeller blade should be as thin as possible in order to minimize compressibility drag The lower limit in terms of thickness is usually defined by structural requirements, e.g. flutter. Furthermore, it can be shown theoretically that the weight of a blade is linearly proportional to the wing root bending moment, and low weight is a crucial design parameter. A propeller blade that is joined to another blade at its tip end is more rigid compared to a conventional mono-blade design of equal load and span. By connecting the tips of two propeller blades both tip displacement and the root bending moment are decreased.

To which degree tip displacement and root bending moment are decreased depends, for instance, on the relation between the gap between the blades and the span/length of the blades, and on the shape of the gap, i.e. to what degree the blades (and the interconnecting member) form a box-like structure or triangle-like structure. A hybrid configuration, where the interconnected blades form a generally triangular-shaped structure but where there still is a certain gap at the tip sections of the blades, can in many applications be the best choice. In order to achieve a bending-moment-free propeller blade connection it is suitable to use a catenary or chainette as interconnecting member. In general, the interconnecting part or member has similar dimensions and strength as the tip ends or tip parts of the propeller blades.

The propellers of interest here are intended to operate with a high rotational speed, around 250 m/s at the tip ends of the propeller blades, which leads to large centrifugal forces. The portion or part that connects two blades should therefore preferably be designed such as to generate tensile forces, and not bending forces. A suitable interconnecting portion or part should therefore have the shape of a continuous curvature, such as a catenary.

The hub member 15, 16, 35, 36, 55, 56 of the inventive air propeller arrangement can in principle be of conventional design. The hub member is a device located centrally in each air propeller and forms a centre of rotation to which the propeller blades can be attached. It may comprise a plurality of parts that may or may not be directly connected to each other. The term "hub member" should in this context be interpreted broadly. Typically, the hub member 15, 16, 35, 36, 55, 56 comprises an annular outer part to which the propeller blades are fastened, wherein the annular outer part is directly or indirectly connected to an engine in such a way that the engine can rotate the hub member and thereby drive the propeller.

With regard to the example shown in figures 3a-3c, in which the root ends of the blades in a connected blade pair are axially spaced, it may be noted that each hub member 35, 36 may comprise two parts: a front part for the front (aft-swept) blades and an aft part for the aft (forward-swept) blades. These two hub member parts are preferably firmly connected for increasing the strength.

The inventive propeller arrangement is intended to be vertically arranged onto an aircraft, i.e. with the propeller blades rotating in a substantially vertical plane and with the propeller centerline (axial direction of hub member) arranged horizontally (when the aircraft is positioned horizontally).

Further, the inventive propeller arrangement is mainly intended to be used in a medium that has a high mach number, say >0,5, in a direction perpendicular to the propeller plane, i.e. in a direction parallel to the axial direction of the hub member.

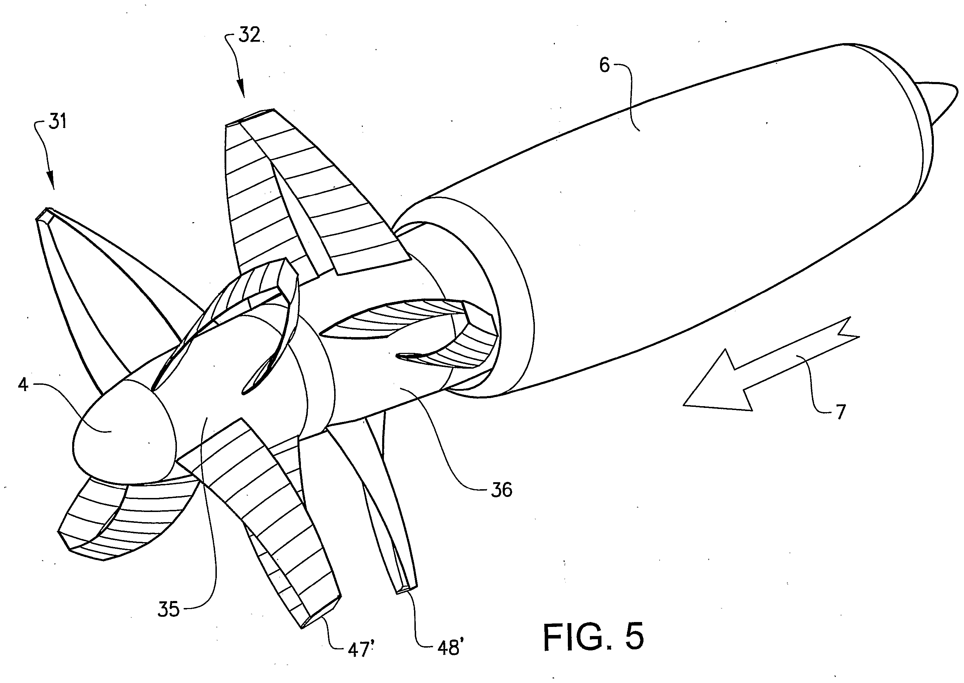

Figures 5-7 show, as an example not covered by the appended claims, the air propeller arrangement 30 according to figures 3a-3c arranged together with an engine that drives both the propellers 31, 32. A difference compared to figures 3a-3c is that the propeller blades in each pair now are interconnected with a flat piece of material 47', 48'.

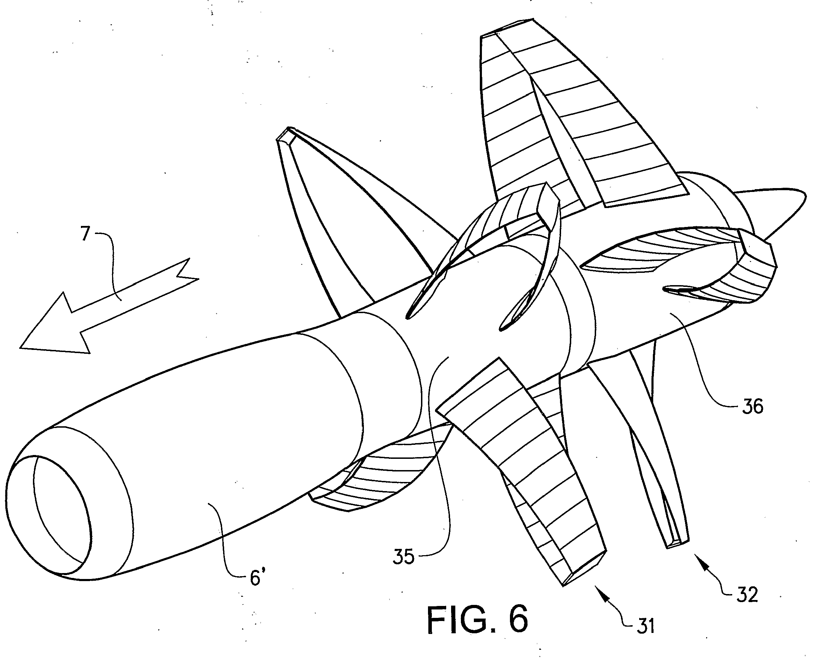

Figure 5 shows a so-called puller configuration where the propellers 31, 32 are positioned in front of the engine, whereas figure 6 shows a so-called pusher configuration where the propellers 31, 32 are positioned at the rear of the engine. The terms front and rear refers to an intended general movement direction of the propeller arrangement 30 which direction is indicated with an arrow 7 in figures 5 and 6. Accordingly, the direction of the airflow when the propellers 31, 32 are in operation, i.e. the direction of the airflow in relation the arrangement 30, is thus the opposite to that of the intended general movement direction.

The actual engine is not shown in figures 5-7. What is shown is only an engine hood 6, 6'. Inside this hood.is an engine in the form of a gas turbine engine arranged. The hub members 35, 36 are operationally connected to a rotating part of the gas turbine engine such as to allow the engine to rotate the propellers 31, 32 in the correct direction. The propellers may be driven more or less directly from the engine, for instance via a connection to the low-pressure turbine axis of the gas turbine engine, or the engine arrangement may comprise a gearbox to allow a larger freedom in the relation between the rotational speeds of the propellers and the gas turbine engine. In general, known technique, such as the technique used for driving the prior art arrangement shown in figure 1, can be used to drive the inventive air propeller arrangement.

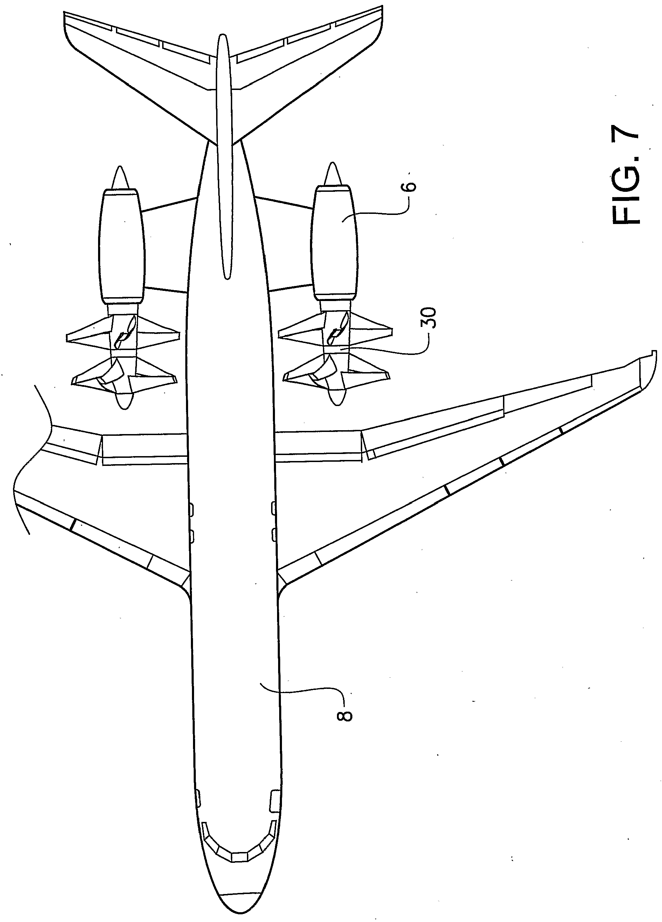

Figure 7 shows the puller configuration of figure 5 arranged onto each rear side of a fixed-wing aircraft 8. The inventive air propeller arrangement can be arranged to a fixed-Wing aircraft in other ways, such as to the wings of or on top of it.

Figures 5-7 are only schematic. For instance, the relation between the length of the propeller blades and the size of the hub member and the engine hood may not be representative.

With the expression that the propeller blades "extend in a radial direction from the hub member" is not meant that the blades extend only in this direction. What is meant is that the blades indeed extend radially, but that they also may extend in other directions. Accordingly, the blades may extend in an axial direction (aft-/ forward-swept) and/or be bent in a. circumferential direction.

The invention is not limited by the embodiments described above but can be modified in various ways within the scope of the claims. For instance, it is not required that it is a continuous curvature between the outer, tip ends of the interconnected blades; it is possible to use another shape, such as a flat piece of material that connects the two blades: Also, this interconnecting part or member may have a width that differs from that of the blade tip ends.

Moreover, the number of interconnected blade pairs in one propeller may be less or more than four, and the number of such pairs does not necessarily have to be the same for the individual propellers in a propeller arrangement.

Further, the first and second propeller blades may have a common root end by being joined close to the hub member.

In principle, the invention can be applied to any air propeller:
a swept high speed propellers; a single rotation propeller and counter-rotating propellers placed in a series concentrically behind each other (as shown in figures 2-7).

The invention does not exclude the use of conventional, non-connected propeller blades arranged to the same propeller or propeller arrangement.

Further, it is not necessary that the propeller arrangement is driven by a gas turbine engine.

## Claims

1. Air propeller arrangement (10, 30, 50) for propulsion of a fixed-wing aircraft (8), said arrangement comprising a first air propeller (11,31,51) that comprises a first hub member (15, 35, 55) and at least a first and a second propeller blades (13, 14, 33, 34, 53, 54),
said first and second blades (13, 14, 33, 34, 53, 54) being configured to contribute significantly to said propulsion and having a substantially equal length,
wherein each of said blades (13, 14, 33, 34, 53, 54) has an inner, root end (17, 18, 37, 38, 57, 58) arranged at the first hub member (15, 35; 55) and an outer, tip end (19, 20, 39, 40, 59, 60) positioned at a distance from the first hub member (15, 35, 55) such that each blade (13, 14, 33, 34, 53, 54) extends in a radial direction from the first hub member (15, 35, 55), wherein the first and second blades (13, 14, 33, 34, 53, 54) are interconnected at their outer ends (19, 20, 39, 40, 59, 60), wherein the first and second blades (13, 14, 33, 34, 53, 54) are swept, wherein each of the first and second blades (13, 14, 33, 34, 53, 54) is configured in such a way that its tip end (19, 20, 39, 40, 59, 60) is displaced in relation to its root end (17, 18, 37, 38, 57, 58) in an axial direction of the first hub member (15, 35, 55), and wherein an outer portion of the first and second blades (13, 14, 33, 34, 53, 54) are either both swept in a forward axial direction or both swept in an aft axial direction.

2. Arrangement (10, 30, 50) according to claim 1,
wherein the first and second blades (13, 14, 33, 34, 53, 54) are interconnected via an interconnecting member (27, 47, 67) extending between said outer ends (19, 20, 39, 40, 59, 60) of the blades (13, 14, 33, 34, 53, 54).

3. Arrangement (10, 30, 50) according to claim 2,
wherein the interconnecting member (27, 47, 67) is integrally formed with the first and second blades (13, 14, 33, 34, 53, 54).

4. Arrangement (10, 30, 50) according to claim 2 or 3, wherein the interconnecting member (27, 47, 67) has the shape of a continuous curvature.

5. Arrangement (10, 30, 50) according to anyone of the above claims, wherein the first and second blades (13, 14, 33, 34, 53, 54) are spaced in a circumferential direction of the first hub member (15, 35, 55).

6. Arrangement (10, 30, 50) according to anyone of the above claims, wherein the root ends (17, 18, 37, 38, 57, 58) of the first and second blades (13, 14, 33, 34, 53, 54) are separated from each other.

7. Arrangement (10, 30, 50) according to anyone of the above claims, wherein the root ends (17, 18, 37, 38, 57, 58) of the first and second blades (13, 14, 33, 34, 53, 54) are spaced in a circumferential direction of the first hub member (15, 35, 55).

8. Arrangement (10, 30, 50) according to anyone of the above claims, wherein the root ends (17, 18, 37, 38, 57, 58) of the first and second blades (13, 14, 33, 34, 53, 54) are spaced in an axial direction of the first hub member (15, 35, 55).

9. Arrangement (10, 30, 50) according to any one of the preceding claims,
wherein the first and/or the second blade (13, 14, 33, 34, 53, 54) is curved in the axial direction of the first hub member (5, 35, 55).

10. Arrangement (10, 30, 50) according to any one of the preceding claims wherein the first and/or the second blade (3, 14, 33, 34, 53, 54) is inclined in relation to the axial direction of the first hub member (15, 35, 55).

11. Arrangement (10, 30, 50) according to anyone of the above claims, wherein the first air propeller (11, 31, 51) comprises a plurality of pairs of propeller blades, wherein each of said blade pairs comprises a first and a second blades (13, 14, 33, 34, 53, 54) according to anyone of the above claims, and wherein the blade pairs are circumferentially distributed around the first hub member (15, 35, 55).

12. Arrangement (10, 30, 50) according to anyone of the above claims, comprising a second air propeller (12, 32, 52) arranged concentrically with the first air propeller (11, 31, 51), wherein the second air propeller comprises a second hub member (16, 36, 56) and at least a third and a fourth propeller blade (23, 24, 43, 44, 63, 64) that extend radially from the second hub member (16, 36, 56), wherein the third and fourth blades (23, 24, 43, 44, 63, 64) are configured to contribute significantly to said propulsion, wherein the third and fourth blade (23, 24, 43, 44, 63, 64) have a substantially equal length, and wherein each of the third and fourth blades (23, 24, 43, 44, 63, 64) has an inner root end arranged at the second hub member (16, 36, 56) and an outer, tip end (25, 226, 45, 46, 65, 66) positioned at a distance from the second hub member.

13. Arrangement (10, 30, 50) according to claim 12,
wherein the third and fourth blades (23, 24, 43, 44, 63, 64) are interconnected at their tip ends (25, 26, 45, 46, 65, 66).

14. Arrangement (10, 30, 50) according to anyone of claims 12-13,
wherein the second air propeller (12, 32, 52) is arranged to rotate in an opposite direction in relation to the first air propeller (1, 31, 51).

15. Arrangement (10, 30, 50) according to anyone of claims 12-14, wherein the second air propeller (12, 32, 52) is arranged according to anyone of claims 2-14, wherein the third and fourth blades (13, 33, 53) are arranged in relation to each other and the second hub member in the same way as the first and second blades are arranged in relation to each other and the first hub member.

16. Arrangement (10, 30, 50) according to anyone of claims 12-15,
wherein both the third and fourth blades (23, 24, 43, 44, 63, 64) are swept and that they are swept in the same direction.

17. Arrangement (10, 30, 50) according to claim 16,
wherein the first, second, third and fourth blades (13, 14, 23, 24, 33, 34, 43, 44, 53, 54, 63, 64) are all swept in a forward direction, wherein forward direction is related to an intended general direction of propulsion.

18. Aircraft (8),
wherein it comprises an air propeller arrangement (10, 30, 50) according to anyone of the above claims.

19. Aircraft (8) according to claim 18,
wherein the propeller arrangement (10, 30, 50) is arranged to the aircraft (8) in such a way that an axial direction of the first hub member (15, 35, 55) substantially coincides with the intended general direction of travel of the aircraft (8).

## Patentansprüche

1. Luftpropelleranordnung (10, 30, 50) zum Antreiben eines Starrflügel-Luftfahrzeugs (8), wobei die Anordnung einen ersten Luftpropeller (11, 31, 51) umfasst, der ein erstes Nabenelement (15, 35, 55) und mindestens ein erstes und ein zweites Propellerblatt (13, 14, 33, 34, 53, 54) umfasst, wobei das erste und das zweite Blatt (13, 14, 33, 34, 53, 54) ausgelegt sind, um erheblich zum Vortrieb beizutragen, und eine im Wesentlichen gleiche Länge aufweisen, wobei jedes der Blätter (13, 14, 33, 34, 53, 54) ein am ersten Nabenelement (15, 35; 55) angeordnetes inneres Fußende (17, 18, 37, 38, 57, 58) und ein abständig zum ersten Nabenelement (15, 35, 55) positioniertes äußeres Kopfende (19, 20, 39, 40, 59, 60) aufweist, so dass sich jedes Blatt (13, 14, 33, 34, 53, 54) vom ersten Nabenelement (15, 35, 55) aus in eine radiale Richtung erstreckt, wobei das erste und das zweite Blatt (13, 14, 33, 34, 53, 54) an ihren äußeren Enden (19, 20, 39, 40, 59, 60) miteinander verbunden sind, wobei das erste und das zweite Blatt (13, 14, 33, 34, 53, 54) gepfeilt sind, wobei das erste und das zweite Blatt (13, 14, 33, 34, 53, 54) jeweils so ausgelegt ist, dass sein Kopfende (19, 20, 39, 40, 59, 60) in axialer Richtung des ersten Nabenelements (15, 35, 55) im Verhältnis zu seinem Fußende (17, 18, 37, 38, 57, 58) versetzt ist, und wobei das erste und das zweite Blatt (13, 14, 33, 34, 53, 54) in einem äußeren Abschnitt entweder beide in einer axialen Vorwärtsrichtung gepfeilt sind oder beide in einer axialen Rückwärtsrichtung gepfeilt sind.

2. Anordnung (10, 30, 50) nach Anspruch 1,
wobei das erste und das zweite Blatt (13, 14, 33, 34, 53, 54) über ein verbindendes Glied (27, 47, 67), das sich zwischen den äußeren Enden (19, 20, 39, 40, 59, 60) der Blätter (13, 14, 33, 34, 53, 54) erstreckt, miteinander verbunden sind.

3. Anordnung (10, 30, 50) nach Anspruch 2,
wobei das verbindende Glied (27, 47, 67) einstückig mit dem ersten und zweiten Blatt (13, 14, 33, 34, 53, 54) ausgebildet ist.

4. Anordnung (10, 30, 50) nach Anspruch 2 oder 3, wobei das verbindende Glied (27, 47, 67) die Form einer kontinuierlichen Krümmung aufweist.

5. Anordnung (10, 30, 50) nach einem der vorhergehenden Ansprüche, wobei das erste und zweite Blatt (13, 14, 33, 34, 53, 54) in Umfangsrichtung des ersten Nabenelements (15, 35, 55) beabstandet sind.

6. Anordnung (10, 30, 50) nach einem der vorhergehenden Ansprüche, wobei die Fußenden (17, 18, 37, 38, 57, 58) des ersten und des zweiten Blatts (13, 14, 33, 34, 53, 54) voneinander getrennt sind.

7. Anordnung (10, 30, 50) nach einem der vorhergehenden Ansprüche, wobei die Fußenden (17, 18, 37, 38, 57, 58) des ersten und des zweiten Blatts (13, 14, 33, 34, 53, 54) in einer Umfangsrichtung des ersten Nabenelements (15, 35, 55) beabstandet sind.

8. Anordnung (10, 30, 50) nach einem der vorhergehenden Ansprüche,
wobei die Fußenden (17, 18, 37, 38, 57, 58) des ersten und des zweiten Blatts (13, 14, 33, 34, 53, 54) in einer Axialrichtung des ersten Nabenelements (15, 35, 55) beabstandet sind.

9. Anordnung (10, 30, 50) nach einem der vorhergehenden Ansprüche,
wobei das erste und/oder das zweite Blatt (13, 14, 33, 34, 53, 54) in Axialrichtung des ersten Nabenelements (5, 35, 55) gekrümmt ist.

10. Anordnung (10, 30, 50) nach einem der vorhergehenden Ansprüche, wobei das erste und/oder das zweite Blatt (3, 14, 33, 34, 53, 54) im Verhältnis zur Axialrichtung des ersten Nabenelements (15, 35, 55) geneigt ist.

11. Anordnung (10, 30, 50) nach einem der vorhergehenden Ansprüche, wobei der erste Luftpropeller (11, 31, 51) mehrere Paare von Propellerblättern umfasst, wobei jedes der Blattpaare ein erstes und ein zweites Blatt (13, 14, 33, 34, 53, 54) nach einem der vorhergehenden Ansprüche umfasst und wobei die Blattpaare in Umfangsrichtung um das erste Nabenelement (15, 35, 55) verteilt sind.

12. Anordnung (10, 30, 50) nach einem der vorhergehenden Ansprüche, umfassend: einen konzentrisch zum ersten Luftpropeller (11, 31, 51) angeordneten zweiten Luftpropeller (12, 32, 52), wobei der zweite Luftpropeller ein zweites Nabenelement (16, 36, 56) und mindestens ein drittes und ein viertes Propellerblatt (23, 24, 43, 44, 63, 64) umfasst, die sich vom zweiten Nabenelement (16, 36, 56) aus radial erstrecken, wobei das dritte und das vierte Blatt (23, 24, 43, 44, 63, 64) ausgelegt sind, um erheblich zum Vortrieb beizutragen, wobei das dritte und das vierte Blatt (23, 24, 43, 44, 63, 64) eine im Wesentlichen gleiche Länge aufweisen und wobei das dritte und das vierte Blatt (23, 24, 43, 44, 63, 64) jeweils ein am zweiten Nabenelement (16, 36, 56) angeordnetes inneres Fußende und ein abständig zum zweiten Nabenelement positioniertes äußeres Kopfende (25, 226, 45, 46, 65, 66) aufweisen.

13. Anordnung (10, 30, 50) nach Anspruch 12,
wobei das dritte und das vierte Blatt (23, 24, 43, 44, 63, 64) an ihren Kopfenden (25, 26, 45, 46, 65, 66) miteinander verbunden sind.

14. Anordnung (10, 30, 50) nach einem der Ansprüche 12 bis 13, wobei der zweite Luftpropeller (12, 32, 52) eingerichtet ist, um sich in einer im Verhältnis zum ersten Luftpropeller (1, 31, 51) entgegengesetzten Richtung zu drehen.

15. Anordnung (10, 30, 50) nach einem der Ansprüche 12 bis 14, wobei der zweite Luftpropeller (12, 32, 52) nach einem der Ansprüche 2 bis 14 angeordnet ist, wobei das dritte und das vierte Blatt (13, 33, 53) im Verhältnis zueinander und zum zweiten Nabenelement auf gleiche Weise angeordnet sind wie das erste und das zweite Blatt im Verhältnis zueinander und zum ersten Nabenelement angeordnet sind.

16. Anordnung (10, 30, 50) nach einem der Ansprüche 12 bis 15,
wobei sowohl das dritte als auch das vierte Blatt (23, 24, 43, 44, 63, 64) gepfeilt sind und sie in der gleichen Richtung gepfeilt sind.

17. Anordnung (10, 30, 50) nach Anspruch 16,
wobei das erste, zweite, dritte und vierte Blatt (13, 14, 23, 24, 33, 34, 43, 44, 53, 54, 63, 64) alle in einer Vorwärtsrichtung gepfeilt sind, wobei Vorwärtsrichtung auf eine beabsichtigte allgemeine Vortriebsrichtung bezogen ist.

18. Luftfahrzeug (8),
wobei es eine Luftpropelleranordnung (10, 30, 50) nach einem der vorhergehenden Ansprüche umfasst.

19. Luftfahrzeug (8) nach Anspruch 18,
wobei die Propelleranordnung (10, 30, 50) am Luftfahrzeug (8) so angeordnet ist, dass eine Axialrichtung des ersten Nabenelements (15, 35, 55) im Wesentlichen mit der beabsichtigten allgemeinen Fortbewegungsrichtung des Luftfahrzeugs (8) zusammenfällt.

## Revendications

1. Système d'hélice aérienne (10, 30, 50) servant à des fins de propulsion d'un aéronef à voilure fixe (8), ledit système comprenant une première hélice aérienne (11, 31, 51) qui comprend un premier élément formant moyeu (15, 35, 55) et au moins une première et une deuxième pales d'hélice (13, 14, 33, 34, 53, 54), lesdites première et deuxième pales (13, 14, 33, 34, 53, 54) étant configurées pour contribuer de manière considérable à ladite propulsion et présentant une longueur essentiellement égale,
chacune desdites pales (13, 14, 33, 34, 53, 54) comportant une extrémité de pied de pale intérieure (17, 18, 37, 38, 57, 58) située au niveau du premier élément formant moyeu (15, 35, 55) et une extrémité de bout de pale extérieure (19, 20, 39, 40, 59, 60) positionnée à une distance du premier élément formant moyeu (15, 35, 55) de telle sorte que chaque pale (13, 14, 33, 34, 53, 54) s'étende dans une direction radiale à partir du premier élément formant moyeu (15, 35, 55), les première et deuxième pales (13, 14, 33, 34, 53, 54) étant mutuellement raccordées au niveau de leurs extrémités extérieures (19, 20, 39, 40, 59, 60), les première et deuxième pales (13, 14, 33, 34, 53, 54) étant déportées, chacune des première et deuxième pales (13, 14, 33, 34, 53, 54) étant configurée de telle sorte que son extrémité de bout de pale (19, 20, 39, 40, 59, 60) soit décalée par rapport à son extrémité de pied de pale (17, 18, 37, 38, 57, 58) dans une direction axiale du premier élément formant moyeu (15, 35, 55), et
une partie extérieure des première et deuxième pales (13, 14, 33, 34, 53, 54) étant soit toutes les deux déportées dans une direction axiale avant, soit toutes les deux déportées dans une direction axiale arrière.

2. Système (10, 30, 50) selon la revendication 1, dans lequel les première et deuxième pales (13, 14, 33, 34, 53, 54) sont raccordées mutuellement par le biais d'un élément de raccordement mutuel (27, 47, 67) s'étendant entre lesdites extrémités extérieures (19, 20, 39, 40, 59, 60) des pales (13, 14, 33, 34, 53, 54).

3. Système (10, 30, 50) selon la revendication 2, dans lequel l'élément de raccordement mutuel (27, 47, 67) est formé d'un seul tenant avec les première et deuxième pales (13, 14, 33, 34, 53, 54).

4. Système (10, 30, 50) selon la revendication 2 ou 3,
dans lequel l'élément de raccordement mutuel (27, 47, 67) présente la forme d'une courbure continue.

5. Système (10, 30, 50) selon l'une quelconque des revendications précédentes, dans lequel les première et deuxième pales (13, 14, 33, 34, 53, 54) sont espacées dans une direction circonférentielle du premier élément formant moyeu (15, 35, 55).

6. Système (10, 30, 50) selon l'une quelconque des revendications précédentes, dans lequel les extrémités de pied de pale (17, 18, 37, 38, 57, 58) des première et deuxième pales (13, 14, 33, 34, 53, 54) sont séparées l'une de l'autre.

7. Système (10, 30, 50) selon l'une quelconque des revendications précédentes, dans lequel les extrémités de pied de pale (17, 18, 37, 38, 57, 58) des première et deuxième pales (13, 14, 33, 34, 53, 54) sont espacées dans une direction circonférentielle du premier élément formant moyeu (15, 35, 55).

8. Système (10, 30, 50) selon l'une quelconque des revendications précédentes, dans lequel les extrémités de pied de pale (17, 18, 37, 38, 57, 58) des première et deuxième pales (13, 14, 33, 34, 53, 54) sont espacées dans une direction axiale du premier élément formant moyeu (15, 35, 55).

9. Système (10, 30, 50) selon l'une quelconque des revendications précédentes,
dans lequel la première et/ou la deuxième pale (13, 14, 33, 34, 53, 54) est courbée dans la direction axiale du premier élément formant moyeu (5, 35, 55).

10. Système (10, 30, 50) selon l'une quelconque des revendications précédentes, dans lequel la première et/ou la deuxième pale (3, 14, 33, 34, 53, 54) est inclinée par rapport à la direction axiale du premier élément formant moyeu (15, 35, 55).

11. Système (10, 30, 50) selon l'une quelconque des revendications précédentes, dans lequel la première hélice aérienne (11, 31, 51) comprend une pluralité de paires de pales d'hélice, dans lequel chacune desdites paires de pales comprend des première et deuxième pales (13, 14, 33, 34, 53, 54) selon l'une quelconque des revendications précédentes, et dans lequel les paires de pales sont réparties de manière circonférentielle autour du premier élément formant moyeu (15, 35, 55).

12. Système (10, 30, 50) selon l'une quelconque des revendications précédentes, comprenant une seconde hélice aérienne (12, 32, 52) disposée de manière concentrique vis-à-vis de la première hélice aérienne (11, 31, 51), dans lequel la seconde hélice aérienne comprend un second élément formant moyeu (16, 36, 56) et au moins une troisième et une quatrième pale d'hélice (23, 24, 43, 44, 63, 64) qui s'étendent radialement à partir du second élément formant moyeu (16, 36, 56), dans lequel les troisième et quatrième pales (23, 24, 43, 44, 63, 64) sont configurées pour contribuer de manière considérable à ladite propulsion, dans lequel les troisième et quatrième pales (23, 24, 43, 44, 63, 64) présentent une longueur essentiellement égale, et dans lequel chacune des troisième et quatrième pales (23, 24, 43, 44, 63, 64) comporte une extrémité de pied de pale intérieure située au niveau du second élément formant moyeu (16, 36, 56) et une extrémité de bout de pale extérieure (25, 226, 45, 46, 65, 66) positionnée à une distance du second élément formant moyeu (16, 36, 56).

13. Système (10, 30, 50) selon la revendication 12, dans lequel les troisième et quatrième pales (23, 24, 43, 44, 63, 64) sont raccordées mutuellement au niveau de leurs extrémités de bout de pale (25, 26, 45, 46, 65, 66).

14. Système (10, 30, 50) selon l'une quelconque des revendications 12 et 13,
dans lequel la seconde hélice aérienne (12, 32, 52) est conçue pour tourner dans une direction opposée par rapport à la première hélice aérienne (1, 31, 51).

15. Système (10, 30, 50) selon l'une quelconque des revendications 12 à 14, dans lequel la seconde hélice aérienne (12, 32, 52) est conçue selon l'une quelconque des revendications 2 à 14, dans lequel les troisième et quatrième pales (13, 33, 53) sont disposées l'une par rapport à l'autre et par rapport au second élément formant moyeu de la même façon que les première et deuxième pales sont disposées l'une par rapport à l'autre et par rapport au premier élément formant moyeu.

16. Système (10, 30, 50) selon l'une quelconque des revendications 12 à 15,
dans lequel les troisième et quatrième pales (23, 24, 43, 44, 63, 64) sont toutes les deux déportées et sont déportées dans la même direction.

17. Système (10, 30, 50) selon la revendication 16, dans lequel les première, deuxième, troisième et quatrième pales (13, 14, 23, 24, 33, 34, 43, 44, 53, 54, 63, 64) sont toutes déportées dans une direction avant, dans lequel la direction avant est définie par rapport à une direction générale prévue de propulsion.

18. Aéronef (8),
comprenant un système d'hélice aérienne (10, 30, 50) selon l'une quelconque des revendications précédentes.

19. Aéronef (8) selon la revendication 18,
dans lequel le système d'hélice (10, 30, 50) est installé sur l'aéronef (8) de telle sorte qu'une direction axiale du premier élément formant moyeu (15, 35, 55) coïncide essentiellement avec la direction générale prévue de déplacement de l'aéronef (8).
